# EUROPÄISCHE PATENTSCHRIFT

(11) **EP 3 501 078 B1**
(45) Veröffentlichungstag und Bekanntmachung des Hinweises auf die Patenterteilung: **03.01.2024**
(21) Anmeldenummer: 16781066.2
(22) Anmeldetag: 22.09.2016
(51) Int. Cl.: H02J 3/24, H01C 10/02, H02J 3/38, H01C 11/00, F03D 9/00

(54) **BREMSWIDERSTANDSANORDNUNG, ÜBERFREQUENZSCHUTZANORDNUNG UND VERFAHREN ZUR BEGRENZUNG EINES FREQUENZANSTIEGS**
BRAKING RESISTANCE ARRANGEMENT, OVERFREQUENCY PROTECTION ARRANGEMENT AND METHOD FOR LIMITING A FREQUENCY RISE
ENSEMBLE RÉSISTANCE DE FREINAGE, SYSTÈME DE PROTECTION DE SURFRÉQUENCE ET PROCÉDÉ DE LIMITATION D'UNE AUGMENTATION DE LA FRÉQUENCE

(43) Veröffentlichungstag der Anmeldung: 26.06.2019
(73) Patentinhaber: Siemens Energy Global GmbH & Co. KG, 81739 München (DE)
(72) Erfinder: ARMSCHAT, Christoph, 91058 Erlangen (DE); MÜLLER, Holger, 91096 Möhrendorf (DE); SPAHIC, Ervin, 91052 Erlangen (DE)
(86) Internationale Anmeldenummer: PCT/EP2016/072571
(87) Internationale Veröffentlichungsnummer: WO 2018/054469

(56) Entgegenhaltungen:
- EP-A2- 2 009 760
- DE-A1-102014 208 207
- DE-U- 7 501 525
- VERRA HUIBERT ET AL: "Impact of improved measurements on performance of a smart thermal energy system", IEEE INSTRUMENTATION & MEASUREMENT MAGAZINE, IEEE SERVICE CENTER, PISCATAWAY, NJ, US, Bd. 18, Nr. 1, 1. Februar 2015 (2015-02-01), Seiten 25-33, XP011571154, ISSN: 1094-6969, DOI: 10.1109/MIM.2015.7016678 [gefunden am 2015-01-20]

## Beschreibung

Die Erfindung betrifft eine Bremswiderstandsanordnung nach dem Oberbegriff des Anspruchs 1, eine Überfrequenzschutzanordnung nach Anspruch 9 sowie ein Verfahren nach Anspruch 11.

In elektrischen Energieübertragungsnetzen wird die Frage der Frequenzsicherheit zunehmend wichtig. Dabei führt ein Ungleichgewicht zwischen erzeugter und ins das Netz eingespeister elektrischer Energie auf der einen Seite und dem Energieverbrauch auf der anderen Seite zu einer Veränderung der Netzfrequenz, die typischerweise bei modernen Wechselspannungsnetzen bei 50 Hz oder 60 Hz liegt. Bisher wurde ein gro-ßer Teil der Energieerzeugung mittels großer thermischer Kraftwerke erzeugt, die zuverlässig und gut planbar Energie erzeugen. Im Zusammenhang mit einer immer stärkeren Integration von erneuerbaren Energiequellen wie Wind und Sonne bei gleichzeitiger Abschaltung von Kohle- und Kernkraftwerken schwankt die Einspeisung in das Energienetz stärker als früher und in kürzeren Zeitspannen.

Windkraftanlagen und Photovoltaikanlagen sind über leistungselektronische Betriebsmittel an das Energieversorgungsnetz angeschlossen und stellen dem Netz somit keine rotierende Masse zur Verfügung. Im
Fehlerfall - z.B. einem Ausfall eines großen Erzeugers oder eines großen Verbrauchers oder im Falle einer Inselnetzbildung - kann die Frequenz der Wechselspannung im Netz schnell absinken oder ansteigen, wobei ein Toleranzbereich um die typische Nennfrequenz des Netzes von 50 Hz oder 60 Hz verlassen wird.

Die konventionellen Stromerzeuger können diese Frequenzabweichungen durch ihre rotierende Masse einerseits die Änderungsgeschwindigkeit der Frequenz verlangsamen und andererseits die Größe der Frequenzabweichung vom der Nennfrequenz begrenzen. Zu große Frequenzabweichungen führen beispielsweise zur Abschaltung der Erzeuger und/oder zum Black-Out.

Bei fallender Netzfrequenz im Energienetz, also einer zu geringen Energieeinspeisung im Vergleich zur Netzlast, werden bisher z.B. die Kraftwerke für eine höhere Energieerzeugung eingeregelt, es werden Energiespeicher zur Einspeisung von Energie aufgerufen, Last einzelner Verbraucher wird abgeworfen oder es wird ein Netzausfall in Kauf genommen. Diese Maßnahmen dienen dazu, Beschädigungen an der Infrastruktur zu verhindern, die bei einer zu stark abweichenden Netzfrequenz entstehen können.

Bei ansteigender Netzfrequenz in Energienetz, also einer zu hohen Energieeinspeisung im Vergleich zur Netzlast, werden bisher Regelungsverfahren für die Kraftwerke eingesetzt oder Energiespeicher zur kurzfristigen Energieentnahme eingesetzt. Auch eine Abschaltung von Kraftwerken steht als letztes Mittel zur Verfügung, um Schäden zu verhindern. Pumpspeicherkraftwerke, die Wasser in ein Oberbecken pumpen und auf diese Weise Energie zwischenspeichern, sind zu langsam für die Verhinderung schneller Frequenzanstiege. Andere Speichertechnologien wie Batterien sind i.d.R. sehr teuer und deutlich komplexer.

Für die Aufnahme von Energie durch Umwandlung in Wärme sind in Stand der Technik bereits Flüssigwiderstände bekannt. Die Druckschrift DE1907364A1 offenbart einen elektrischen Widerstand, der durch Verdampfung einer Flüssigkeit Energie aufnimmt.

Aus dem Artikel "Impact of improved measurements on performance of a smart thermal energy system" von Verra, H. et al, IEEE Instrumentation & Measurement Magazine, Bd. 18, Nr. 1, 1. Februar 2015, Seiten 25-33, ist ein Hochspannungs-Elektroden-Boiler bekannt, mit dem die Frequenzstabiltät eines Energieversorgungsnetzes verbessert werden soll.

Das deutsche Gebrauchsmuster DE 75 01 525 U offenbart einen Wasserwiderstand, bei dem auf Siedetemperatur erhitztes Wasser mit einer Strahldüse in eine Kegelstumpfelektrode eingespritzt wird.

Die Patentanmeldung EP 2 009 760 A2 offenbart ein System zum Dämpfen von elektromechanischen Schwingungen. Dieses System weist einen elektrischen Widerstand auf, der mittels eines Stromrichters und eines Transformators an ein Wechselspannungsnetz angeschlossen ist.

Aus der Offenlegungsschrift DE 10 2014 208 207 A1 ist eine Vorrichtung zum Verbessern der Stabilität eines elektrischen Verteilnetzes bekannt. Dabei wird bei einer Zunahme bzw. Abnahme einer Regelleistungsanforderung eine einem Anschlusspunkt eines Verbrauchers zur Verfügung gestellte Spannungsamplitude gegenüber einer Normspannungsamplitude reduziert bzw. erhöht.

An die Erfindung stellt sich die Aufgabe, eine Anordnung zur Verhinderung eines schnellen Netzfrequenzanstiegs bereit zu stellen, die besonders zuverlässig, kostengünstig, wartungsarm und einfach an unterschiedliche Anforderungen in Bezug auf die aufzunehmende Energiemenge anpassbar ist.

Die Erfindung löst diese Aufgabe durch eine Bremswiderstandsanordnung nach Anspruch 1.

Die erfindungsgemäße Bremswiderstandsanordnung weist den Vorteil auf, dass die Schutzeinrichtung einen Frequenzanstieg sehr schnell erkennen kann, so dass die Bremswiderstandsanordnung schon im Bereich einiger hundert Millisekunden aktiviert werden kann, um die Frequenz schnell zu stabilisieren. Die Bremswiderstandsanordnung wandelt elektrische Energie in Wärme um und kann auf diese Weise als schnell zuschaltbare Last überschüssige Energie aus dem Energienetz entnehmen. Beispielsweise kann mit der Bremswiderstandsanordnung, wenn Wasser als Flüssigkeit verwendet wird, mit ca. 3000 l Wasser eine Energieaufnahme von 1000 MWsec bei einer Erwärmung um 100 K (vom Gefrierpunkt bis zum Siedepunkt) erreicht werden. Dieses Rechenbeispiel kann zur Auslegung der Bremswiderstandsanordnung herangezogen werden, wobei im Betrieb i.d.R. eine Erwärmung um lediglich 60 K bis 80 K vorgesehen wird.

Ein Gleichgewicht zwischen Energieeinspeisung und Netzlast kann wieder hergestellt werden, so dass die Netzfrequenz zur Nennfrequenz von z.B. 50 Hz oder 60 Hz zurückkehrt. Je kleiner dabei das Netz ist, desto besser ist die erfindungsgemäße Bremswiderstandsanordnung einsetzbar. Beispielsweise ist das Inselnetz von Irland geeignet, weil dort ein relativ kleines Hochspannungsnetz existiert, das daher anfällig für rasche Frequenzabweichungen bei Änderung von Erzeugung und Last ist.

Weitere Anwendungsgebiete für die Erfindung sind beispielsweise Situationen im Netzbetrieb, bei denen hohe Überfrequenzen bei Abwurf von großen Lasten in schwachen Netzen auftreten. Mit der geringen restlichen Last kann es zu sehr hohen Überfrequenzen kommen, da die Primärregler der Kraftwerke langsam auf Frequenzänderungen reagieren. Überfrequenzen von über z.B. 52,5 Hz (in Europa) führen zur Notabschaltung der thermischen Kraftwerke (Kohle, Gas) und damit zum Blackout im gesamten Netz. Ein solcher Vorfall führte beispielsweise zum Ausfall einer HGÜ-Verbindung zwischen Cahora-Bassa in Mozambique.

Auch bei einer Teilnetzbildung bei Netzauftrennung in räumlich entfernte Teilnetze sind in schwach ausgebauten Netzen oft Probleme zu erwarten, z.B. weil die Teilnetze nicht (N-1) sicher mit Übertragungsleitungen verbunden sind. Beim Ausfall einer solchen Leitung entstehen hohe Überfrequenzen in einem Teilnetz mit entsprechendem Leistungsüberschuss, wenn ein hoher Leistungstransfer unterbrochen wird. Diese Problematik stellt sich beispielsweise in den Teilnetzen Vietnams, die mit einer einzelnen 500kV-Verbindungsleitung mit 2 GW bis 3 GW Übertragungsleistung verbunden sind.

Ferner können auch Netzkupplungen von zwei Netzteilen Überfrequenzen auslösen. Durch den Anschluss von Inselnetzen oder entfernten kleineren Netzteilen an größere Verbundnetze kann der gesamte Kraftwerkspark besser ausgelastet werden. Es wird ein ökonomischerer Betrieb durch Abschaltung von ineffizienten Kraftwerken erreicht. Wenn lange Transferleitungen zwischen den Netzen vorgesehen werden, kann ein Ausfall der Leitung aufgrund einer geringeren Trägheit zu Überfrequenzen mit einem hohen Frequenzgradienten (ROCOF) im Netz mit hohem Generatorüberschuss im Vergleich zur restlichen Last führen. Ein Beispiel hierfür ist das eingangs bereits erwähnte Inselnetz Irlands mit einem Frequenzgradienten ROCOF < 0,5 Hz/s und einer Frequenz von 51.5 Hz bis 52Hz.

Des Weiteren kann bei Kraftwerken oder HGÜ-Anlagen mit Synchronmaschinen (so genannten "synchronous compensators"), die mit einer temporären und nicht (N-1) sicheren Anbindung an das Netz angeschlossen sind, eine Netztrennung zu einer schnell ansteigenden Frequenz führen. Die Schnellabschaltung kann die Lebensdauer der rotierenden Betriebsmittel stark verringern, so dass die Erfindung mit Vorteil eingesetzt werden kann.

Aus bei HGÜ-Anlagen kann es in Punkt-zu-Punkt oder Multi-Terminal Anlagen zu Überfrequenzen kommen, wenn das System in ein Leistungsungleichgewicht gerät, so dass die Erfindung vorteilhaft eingesetzt werden kann.

In einer bevorzugten Ausführungsform der erfindungsgemäßen Bremswiderstandsanordnung ist eine Leistungsschalteinrichtung vorgesehen und die Schutzeinrichtung ist ausgebildet,
- bei einem Frequenzanstieg im elektrischen Energienetz mittels der Leistungsschalteinrichtung den elektrischen Strom über die Elektroden durch die Flüssigkeit zu leiten, und
- mittels der Leistungsschalteinrichtung den elektrischen Strom über die Elektroden durch die Flüssigkeit abzuschalten, bevor die Flüssigkeit siedet. Dies ist ein Vorteil, weil bei einem Sieden der Flüssigkeit durch den entstehenden Dampf der Widerstandswert bzw. die Energieaufnahmefähigkeit der Bremswiderstandsanordnung stark verändert wird, was eine kontrollierte Energieentnahme aus dem Energienetz erschwert. Ein weiterer Vorteil ist es, dass die Flüssigkeit nicht durch Sieden entweicht und die Bremswiderstandsanordnung ohne Nachfüllen bzw. aufwändige Wartung vielfach wiederverwendbar ist. Typischerweise kann eine Bremswiderstandsanordnung Jahre bis Jahrzehnte ohne das Erfordernis einer nennenswerten Wartung eingesetzt werden. Wird Wasser als Flüssigkeit eingesetzt, so wird die Bremswiderstandsanordnung z.B. bei ca. 80°C abgeschaltet, um ein Sieden zu vermeiden. Entsprechend kann die Flüssigkeit von der Temperatur vor dem Einschalten bis zu einer festgelegten Schwellentemperatur erhitzt werden, um überschüssige Energie aufzunehmen. Dabei weist die Flüssigkeit vor dem Einschalten i.d.R. die Umgebungstemperatur auf, also z.B. 20°C. Es ergeben sich in diesem Beispiel 60°C als Temperaturfenster für eine Energieaufnahme.

Wird die Bremswiderstandsanordnung in besonders kalten Regionen eingesetzt, so kann eine Flüssigkeit verwendet werden, die bei Temperaturen unter 0°C nicht gefriert. Wird Wasser eingesetzt, so kann durch Frostschutzzusatzstoffe sichergestellt werden, dass die Flüssigkeit nicht einfriert und die Bremswiderstandsanordnung einsatzbereit bleibt. Dabei ist zu beachten, dass sich durch die Frostschutzzusatzstoffe der Leitwert der Flüssigkeit ändert, was bei der Auslegung der Anlage zu beachten ist. Alternativ kann eine Heizung eingesetzt werden, um die Flüssigkeit stets oberhalb ihres Gefrierpunktes zu halten. Beispielsweise kann eine elektrische Heizung eingesetzt werden. Auch eine Beheizung der Flüssigkeit mittels Sonneneinstrahlung nach Art einer Solarthermieanlage kann mit Vorteil eingesetzt werden.

In einer besonders bevorzugten Ausführungsform der erfindungsgemäßen Bremswiderstandsanordnung ist eine Heizungskontrolleinrichtung dafür vorgesehen, bei einer Flüssigkeitstemperatur unter einem vorher festgelegten unteren Schwellenwert den Stromfluss kurz einzuschalten, um die Flüssigkeit auf eine Temperatur über den unteren Schwellenwert zu erwärmen. Um die Netzfrequenz nicht zu stark zu beeinflussen, kann dies mit sehr kurzen, regelmäßigen Strompulsen erreicht werden. In diesem Fall bietet sich die Verwendung eines Halbleiterschalters in der Leistungsschalteinrichtung an, da dieser besonders schnell ein- und ausgeschaltet werden kann.

Alternativ ermöglicht eine auf Erdpotential installierte Heizung ein Aufwärmen der Flüssigkeit über die zulässige Minimaltemperatur, um Eisbildung bei niedrigen Umgebungstemperaturen zu vermeiden.

In besonders heißen Regionen kann eine aktive Kühlung mittels üblicher Kühleinrichtungen vorgesehen werden, um die Flüssigkeit direkt unter einen vorher festgelegten Schwellenwert abzukühlen und auf diese Weise stets eine ausreichend großen Temperaturbereich für eine hohe Energieaufnahme bereit zu halten. Alternativ oder zusätzlich zu einer Kühlung kann das Gehäuse in einer Zisterne unterirdisch oder in einem Keller angeordnet werden, damit niedrige Temperaturen in der Umgebung vorherrschen.

In einer weiteren bevorzugten Ausführungsform der erfindungsgemäßen Bremswiderstandsanordnung ist eine Temperaturmesseinrichtung für ein Messen der Temperatur der Flüssigkeit vorgesehen. Dies ist ein Vorteil, weil so die Temperatur der Flüssigkeit direkt gemessen werden kann und nicht indirekt, z.B. anhand einer Gehäusetemperatur oder anhand einer temperaturabhängigen Leitwertveränderung, geschätzt werden muss. Die Temperaturmesseinrichtung kann beispielsweise über einen Lichtwellenleiter mit dem äußeren des Gehäuses verbunden werden, um keine Kurzschlüsse im Inneren zu erzeugen.

Bei der erfindungsgemäßen Bremswiderstandsanordnung ist eine Leitwertmesseinrichtung für ein Messen der elektrischen Leitfähigkeit der Flüssigkeit vorgesehen. Dies ist ein Vorteil, weil so stets überwacht werden kann, dass die Flüssigkeit einsatzbereit ist. Beispielsweise kann so von außen, ggf. per Fernüberwachung, der Betriebszustand über Jahre kontrolliert werden. Probleme könnten sich beispielsweise ergeben, wenn ein Elektrolyt eingesetzt würde, dessen Bestandteile sich nach längerer Zeit zersetzen oder als Festkörper ablagern könnten. Dies würde jedoch mit einer Leitwertmessung erkannt werden. Die Leitwertmesseinrichtung kann beispielsweise ebenso wie die Temperaturmesseinrichtung im Inneren des Gehäuses vorgesehen und mit einem Lichtwellenleiter mit der Außenseite verbunden werden. Der Leitwert kann beispielsweise gemessen werden, indem bei ausgeschalteter Bremswiderstandsanordnung ein vergleichsweise kleiner Messstrom durch die Flüssigkeit geschickt wird. Mit Vorteil können dafür in einer anderen Ausführung die bereits vorhandenen beiden Elektroden verwendet werden, so dass in Inneren des Gehäuses keine zusätzlichen Elektroden für die Leitwertmesseinrichtung angebracht werden müssen.

Alternativ kann der Leitwert in einem extern geführten Wasserkreislauf auf Erdpotential mit konventionellen Leitwertmessgeräten ermittelt werden.

In einer weiteren bevorzugten Ausführungsform der erfindungsgemäßen Bremswiderstandsanordnung weist mindestens eine der Elektroden ein Material aus der Liste der folgenden Materialien auf: Stahl, Graphit, Aluminium, Gold, eine silberhaltige Legierung.

Bei der erfindungsgemäßen Bremswiderstandsanordnung ist die erste Elektrode zum Anschließen an ein Hochspannungspotential vorgesehen. Dies ist ein Vorteil, weil Hochspannungsnetze besonders von Frequenzanstiegen betroffen sind. Typischerweise weist ein Hochspannungsnetz eine Nennspannung von beispielsweise 400 kV auf.

Alternativ ist bei der erfindungsgemäßen Bremswiderstandsanordnung die erste Elektrode zum Anschließen an ein Mittelspannungspotential vorgesehen. Dies ist ein Vorteil, weil auch die Regelung von Mittelspannungsnetzen durch zunehmende Einspeisung erneuerbarer Energien schwieriger wird. Eine entsprechende Bremswiderstandsanordnung kann daher auch in Mittelspannungsnetzen eingesetzt werden.

Bei der erfindungsgemäßen Bremswiderstandsanordnung ist die zweite Elektrode zum Anschließen an das Erdpotential vorgesehen. Dabei kann beispielsweise bei Einsatz von mehreren Bremswiderstandsanordnungen, die an drei Phasen eines Energienetzes angeschlossen sind, die zweite Elektrode an einen gemeinsamen isolierten Sternpunkt oder direkt an das Erdpotential angeschlossen sein. Dies ist vorteilhaft, weil es eine besonders einfache Bauform ist.

Bei der erfindungsgemäßen Bremswiderstandsanordnung ist das Gehäuse gegenüber der Flüssigkeit elektrisch isoliert. Dies ist ein Vorteil, weil Kurzschlüsse vermieden werden.

In einer weiteren bevorzugten Ausführungsform der erfindungsgemäßen Bremswiderstandsanordnung besteht zumindest anteilig aus einem glasfaserverstärktem Kunststoff. Dies ist ein Vorteil, weil glasfaserverstärktem Kunststoffe elektrisch nicht leitend, sehr stabil, kostengünstig und in der Hochspannungstechnik lange erprobt sind.

In einer weiteren bevorzugten Ausführungsform der erfindungsgemäßen Bremswiderstandsanordnung weist das Gehäuse eine Isolatoreinrichtung auf. Dies ist ein Vorteil, weil die Bremswiderstandsanordnung auf diese Weise vor Kurzschlüssen geschützt wird. Es kann z.B. ein Silikonisolator oder ein Porzellanisolator auf das Gehäuse aufgebracht sein. Üblicherweise werden Schirme zur Verlängerung eines Kriechweges vorgesehen.

In einer weiteren bevorzugten Ausführungsform der erfindungsgemäßen Bremswiderstandsanordnung weist das Gehäuse ein Überdruckventil auf, das dafür ausgebildet ist, bei einem vorher festgelegten Überdruck im Gehäuse zu öffnen und Gas ausströmen zu lassen. Dies ist ein Vorteil, weil im Fehlerfall wie z.B. einem Kurzschluss Gase entstehen können, die das Gehäuse durch einen Überdruck platzen lassen oder zumindest beschädigen könnten. Durch das Überdruckventil werden Überdrucksituationen beherrschbar, ohne die Bremswiderstandsanordnung zu zerstören.

In einer anderen bevorzugten Ausführungsform der erfindungsgemäßen Bremswiderstandsanordnung weist das Gehäuse an seiner Oberseite eine Öffnung auf. Die Öffnung kann beispielsweise mit einem Dach gegen Regen oder andere Witterungseinflüsse geschützt werden. Die Öffnung hat den Vorteil, dass im Fehlerfall Gas aus dem Inneren besonders leicht ausströmen kann, was die Sicherheit erhöht. Die Öffnung kann in einer Weiterbildung dieser Ausführungsform mit einer Sollbruchfläche abgedeckt sein, die z.B. als eine Membran ausgebildet ist, die bei einem Innendruck über einem vorher festgelegten Druckschwellenwert reißt. Die Sollbruchfläche kann jedoch auch ein anderes Material aufweisen, das leicht einreißt.

In einer weiteren bevorzugten Ausführungsform der erfindungsgemäßen Bremswiderstandsanordnung sind der Flüssigkeitseinlass und der Flüssigkeitsauslass vorgesehen, um die Flüssigkeit im Gehäuse auszutauschen. Dies ist ein Vorteil, weil die Flüssigkeit auf diese Weise erneuert und/oder zu Wartungszwecken ausgetauscht werden kann. Typischerweise wird die Flüssigkeit nur bei ausgeschalteter Bremswiderstandsanordnung getauscht, da die Bremswiderstandsanordnung bei Einschaltung in Sekundenbruchteilen die Flüssigkeit erwärmt - ein Austausch von ggf. mehreren Tonnen Flüssigkeit würde im Betrieb möglicherweise zu lange dauern, um einen erheblichen Einfluss auf z.B. den Leitwert der Flüssigkeit zu haben.

Einlass und Auslass können steuerbare Ventile aufweisen, die über eine Kontrolleinrichtung geöffnet oder geschlossen werden können. Einlass und Auslass können nahe dem Boden des Gehäuses angeordnet und elektrisch isoliert werden, z.B. mit einer Silikonummantelung mit Schirmen. Auf diese Weise sind Einlass und Auslass gegen die Elektroden und gegen Erde isoliert. Dies ist insbesondere dann vorteilhaft, wenn sich für die Elektrode, die mit dem Erdpotential beaufschlagt wird, eine Potentialverschiebung von einigen kV einstellen sollte.

In einer weiteren bevorzugten Ausführungsform der erfindungsgemäßen Bremswiderstandsanordnung ist die Flüssigkeitskreislaufanordnung mit einer Kühlvorrichtung vorgesehen, die über den Flüssigkeitseinlass und den Flüssigkeitsauslass fluidleitend mit dem Gehäuse verbunden ist. Dies ist ein Vorteil, weil mittels der Kühlvorrichtung die Temperatur der Flüssigkeit eingestellt werden kann, um z.B. eine ausreichende Kapazität zur Aufnahme von Energie bereit zu halten. Auch eine Abkühlung der Flüssigkeit direkt nach einem Einsatz der Bremswiderstandsanordnung ist mit Vorteil möglich, weil die Bremswiderstandsanordnung auf diese Weise schneller wieder betriebsbereit ist. Die Kühlvorrichtung kann nach allen gängigen Prinzipien der Kühltechnik konstruiert sein, also beispielsweise als Kompressions-Wärmepumpe, als AbsorptionsWärmepumpe oder als Adsorptions-Wärmepumpe.

Auch eine Einstellung der Temperatur mittels einer zugeschalteten Heizungsvorrichtung ist mit Vorteil möglich, beispielsweise in sehr kalten Regionen der Erde. Auf diese Weise wird die Bremswiderstandsanordnung stets betriebsbereit gehalten. Bei der erfindungsgemäßen Bremswiderstandsanordnung ist eine Leitwerteinstellungseinrichtung vorgesehen. Die Leitwerteinstellungseinrichtung ist in einer Flüssigkeitskreislaufanordnung angeordnet. Der Leitwert der Flüssigkeit wird in der Leitwerteinstellungseinrichtung durch Zugabe eines Lösungsmittels verringert oder durch Zugabe eines Elektrolyten vergrößert. Wird beispielsweise eine wässrige Natriumchloridlösung als Flüssigkeit eingesetzt, so kann der Leitwert durch Verdünnung mit destilliertem Wasser vermindert und durch Zumischung von Kochsalz verringert werden. Dies ist ein Vorteil, weil mittels eines genau einstellbaren Leitwerts die Bremswiderstandsanordnung besonders gut auf die Anforderungen im Betrieb eingestellt werden kann. Insbesondere kann bei einer Wartung vor Ort der Leitwert neu eingestellt werden, ohne dass die gesamte Flüssigkeit ausgetauscht werden muss.

Bei der erfindungsgemäßen Bremswiderstandsanordnung ist mindestens eine der Elektroden gefaltet ausgebildet, um eine vergrößerte Oberfläche für die Wechselwirkung mit der Flüssigkeit bereit zu stellen. Dies ist ein Vorteil, weil die Oberfläche für eine Wechselwirkung mit der Flüssigkeit vergrößert wird, was die Bildung von Dampfblasen vermeidet. Gefaltet im Sinne der Erfindung sind alle Körper, die nicht massiv ausgebildet sind. Beispielsweise ist ein Blech mit einem wellenförmigen oder sägezahnförmigen Querschnitt gefaltet im Sinne der Erfindung.

In einer weiteren bevorzugten Ausführungsform der erfindungsgemäßen Bremswiderstandsanordnung ist mindestens eine der Elektroden mit einer porösen Nanostruktur ausgebildet, um eine vergrößerte Oberfläche für die Wechselwirkung mit der Flüssigkeit bereit zu stellen. Dies ist ein Vorteil, weil die Oberfläche für eine Wechselwirkung mit der Flüssigkeit vergrößert wird, was die Bildung von Dampfblasen vermeidet. Besonders bevorzugt ist es, wenn eine gefaltete Elektrode mit poröser Nanostruktur eingesetzt wird.

In einer weiteren bevorzugten Ausführungsform der erfindungsgemäßen Bremswiderstandsanordnung ist die Flüssigkeit eine wässrige Elektrolytlösung mit einer vorher festgelegten Elektrolytkonzentration. Im Fall von Wasser kann Natriumchlorid als Elektrolyt dienen. Dies ist ein Vorteil, weil der Leitwert durch Zugabe eines Salzes gesteigert wird, so dass eine schnellere Erwärmung infolge eines vergleichsweise grö-ßeren Stromflusses erreicht wird. Natriumchlorid ist kostengünstig und leicht zu handhaben, was ein weiterer Vorteil ist. Weiterhin ist eine Kochsalzlösung ungiftig und in Bezug auf das Grundwasser unbedenklich.

In einer weiteren bevorzugten Ausführungsform der erfindungsgemäßen Bremswiderstandsanordnung weist die Flüssigkeit Schwefelsäure mit einer vorher festgelegten Konzentration auf. Dies ist ein Vorteil, weil bereits geringe Mengen Schwefelsäure zu einem geeigneten Leitwert führen können.

In einer weiteren bevorzugten Ausführungsform der erfindungsgemäßen Bremswiderstandsanordnung weist die Flüssigkeit Natriumsulfat mit einer vorher festgelegten Konzentration auf. Dies ist ein Vorteil, weil Natriumsulfat einen besonders hohen Leitwert aufweist.

Zur besseren Erläuterung der Erfindung zeigen in schematischer Darstellung die
- Figur 1: ein Ausführungsbeispiel einer erfindungsgemäßen Bremswiderstandsanordnung, und
- Figur 2: eine Draufsicht auf eine gefaltete Elektrode, und
- Figur 3: ein Prinzipschaltbild für ein Verfahren zur Begrenzung eines Frequenzanstiegs in einem elektrischen Energieversorgungsnetz, und
- Figur 4: einen zeitlichen Verlauf eines Frequenzanstiegs in einem Energieversorgungsnetz und
- Figur 5: einen zeitlichen Verlauf einer Frequenzschwingung zwischen zwei Versorgungsgebieten innerhalb eines Energieversorgungsnetzes.

Die Bremswiderstandsanordnung 1 ist mit einem elektrischen Energieversorgungsnetz 13 verbunden. Das Energieversorgungsnetz 13 weist drei Phasen L1, L2, L3 auf. Auf jeder der Phasen liegen 400 kV an. Es handelt sich folglich um ein Hochspannungsnetz. Die Phase L3 ist über eine Zugangsleitung 22 mit einer Leistungsschalteinrichtung 19 verbunden. Die Leistungsschalteinrichtung 19 ist über eine Leitung 23 mit einem Gehäuse verbunden. Das Gehäuse weist einen oberen Flansch 5 und einen unteren Flansch 4 auf. Der untere Flansch 4 des Gehäuses steht auf zwei Isolatoren 98. Die Seitenwände des Gehäuses werden durch ein Rohr 3 aus glasfaserverstärktem Kunststoff gebildet, das zur elektrischen Isolierung mit einem Isolator 2 beschichtet ist. Der Isolator 2 weist Schirme aus Silikon zur Vergrößerung eines Kriechweges auf. Der obere Flansch 5 weist weiterhin ein Überdruckventil 16 auf.

In einer nicht gezeigten Bauform kann alternativ der obere Flansch 5 offen und/oder mit einer Abdeckung ausgeführt werden, um plötzlich entstehenden Überdruck (Gase und Elektrolyt) im Innern nach oben abzuführen. Dabei empfiehlt sich Verwendung eines umweltverträglichen Elektrolyten als Flüssigkeit. Ein Überdruckventil wird dann nicht benötigt.

Das Gehäuse ist bis zu einer Flüssigkeitsstandlinie 31 mit einer Flüssigkeit 6 befüllt. Dabei handelt es sich um einen Elektrolyten, beispielsweise eine wässrige Schwefelsäurelösung. In die Flüssigkeit 6 sind zwei Elektroden 7, 8 eingetaucht. Die erste Elektrode 7 ist über ein Verbindungsstück 14 und eine Durchführung durch den oberen Flansch 5 mit der Leitung 23 verbunden und liegt daher bei Einschaltung der Leistungsschalteinrichtung 19 auf Hochspannungspotenzial. Die zweite Elektrode 8 ist über ein Verbindungsstück 11 und eine Durchführung durch den unteren Flansch 4 mit dem Erdpotenzial 12 verbunden. Das Gehäuse weist eine Breite 16 und eine Höhe 15 auf.

Um eine Bremswiderstandsanordnung mit geeigneter Energieaufnahmekapazität für ein elektrisches Hochspannungsnetz bereitzustellen, kann beispielsweise eine Breite von 1m und eine Höhe von 7m bis 10m vorgesehen werden. Die Zeichnung ist in diesem Aspekt nicht maßstabsgetreu. Insbesondere kann die Höhe 15 derart gewählt werden, dass der obere Flansch 5 und der untere Flansch 4 durch die Länge 15 derart voneinander beabstandet werden, dass die Durchschlagsfestigkeit der Luft bei Hochspannung nicht überschritten wird. Wird die Bremswiderstandsanordnung in der Mittelspannungsebene eingesetzt, so ergeben sich entsprechend andere Abmessungen für die Auslegung der Anordnung.

Im Inneren des Gehäuses ist weiterhin eine Temperaturmesseinrichtung 9 in die Flüssigkeit eingetaucht. Die Temperaturmesseinrichtung 9 ist über ein Verbindungsstück 10 mit einem Lichtwellenleiter mit dem Rohr 3 verbunden und durch dieses und den Isolatormantel 2 hindurchgeführt. Außerhalb des Gehäuses ist eine Kommunikationsverbindung 24 vorgesehen, die die Temperaturmesseinrichtung 9 mit einer Schutzeinrichtung 20 verbindet. Die Schutzeinrichtung 20 ist über eine Kommunikationsverbindung 21 mit der Leistungsschalteinrichtung 19 verbunden. Über eine Messleitung (nicht dargestellt) ist das Schutzgerät 20 mit der Phase L3 des Energieversorgungsnetzes 13 verbunden.

Neben der optischen Verbindung einer Temperaturmesseinrichtung ist es alternativ möglich, die Temperaturmesseinrichtung über eine Funkverbindung mit einer auf Erdpotential liegenden Auswerteeinrichtung zu verbinden. In dieser Bauform können der Lichtwellenleiter und die Kommunikationsverbindung 24 entfallen.

Die Bremswiderstandsanordnung 1 weist einen Flüssigkeitsauslass 17 und einen Flüssigkeitseinlass 18 auf, die mit einer Flüssigkeitskreislaufanordnung 25-30 verbunden sind. Die Verbindungen 25-30 sind elektrisch isoliert ausgeführt, zum Beispiel mittels Hohlkörperisolatoren 99, damit z.B. bei einer dreiphasigen Ausgestaltung der Sternpunkt der dreiphasigen Anordnung über einen (nicht darstellten) Überspannungsableiter oder mittels einer (nicht darstellten) Drossel an das Erdpotential 12 angebunden werden kann.

Die Flüssigkeitskreislaufanordnung 25-30 weist eine Pumpe 30 auf. Die Pumpe 30 ist über eine Verbindungsleitung 29 mit einer Leitwerteinstellungseinrichtung 27 verbunden. Die Leitwerteinstellungseinrichtung 27 ist über eine Verbindungsleitung 28 mit einer Kühleinrichtung 26 verbunden.

Im Folgenden soll nun die Funktionsweise der Bremswiderstandsanordnung erläutert werden. Tritt im Energieversorgungsnetz 13 ein Ungleichgewicht zwischen einer Energieeinspeisung und einer Energieentnahme auf, so dass zu viel Energie - beispielsweise durch starke Einspeisung regenerativer Energiequellen wie Photovoltaikanlagen und Windkraftanlagen - bei einem im Vergleich dazu zu geringen Verbrauch eingespeist wird, so steigt die Frequenz der Wechselspannung im Energieversorgungsnetz auf Werte oberhalb der vorgesehenen Nennfrequenz von 50 Hz oder gegebenenfalls 60 Hz (in den USA) an. Ein solcher Frequenzanstieg auf der Phase L3 wird durch die Schutzeinrichtung 20 erkannt. Um einem weiteren Frequenzanstieg rasch entgegenzuwirken, wird nun mittels der Bremswiderstandsanordnung 1 eine große Last sehr schnell zugeschaltet. Die Schutzeinrichtung 20 schaltet hierfür die Leistungsschalteinrichtung 19 ein, so dass die Elektrode 7 auf Hochspannungspotenzial liegt. Da die Flüssigkeit 6 elektrisch leitfähig ist, ergibt sich sofort ein starker Stromfluss durch die Flüssigkeit 6. Hat diese vor Einschaltung der Bremswiderstandsanordnung beispielsweise die Temperatur der Umgebung, also zum Beispiel 20 °C, so steigt diese nun innerhalb weniger Sekunden stark an. Die Temperaturmesseinrichtung überwacht die Temperatur der Flüssigkeit und übermittelt den Temperaturwert an die Schutzeinrichtung 20. Erreicht die Flüssigkeit eine Temperatur nahe ihrem Siedepunkt oder einer vorher festgelegten Maximaltemperatur, so schaltet die Schutzeinrichtung 20 über die Leistungsschalteinrichtung 19 den Stromfluss wieder aus. Auf diese Weise wird sichergestellt, dass kein Sieden beziehungsweise keine Gasbildung der Flüssigkeit 6 auftritt. Dies hat den Vorteil, dass die Flüssigkeit nicht entweicht und durch Wartungsmaßnahmen nachgefüllt werden muss. Das Überdruckventil 16 ist als Sicherheitsmaßnahme vorgesehen für den Fall, dass im Betrieb ein Kurzschluss mit entsprechender Verdampfung der Flüssigkeit 6 auftritt. Tritt ein solcher Fehlerfall auf, so kann Gas aus dem Gehäuse über das Überdruckventil 16 entweichen, so dass keine Explosionsgefahr besteht.

Mit der Flüssigkeitskreislaufanordnung 25 ist es beispielsweise möglich, bei ausgeschalteter Leistungsschalteinrichtung 19 die Flüssigkeit 6 innerhalb des Gehäuses auszutauschen oder mittels der Kühleinrichtung 26 abzukühlen. Die Abkühlung der Flüssigkeit 6 bietet insofern den Vorteil, dass in heißen Regionen der Erde auf diese Weise stets eine niedrige Temperatur der Flüssigkeit sichergestellt werden kann, so dass ein ausreichender Temperaturabstand zum Siedepunkt der Flüssigkeit 6 eingehalten wird, wodurch eine hohe Energieaufnahmekapazität sichergestellt wird. Ein weiterer Anwendungsfall der Kühleinrichtung 26 besteht darin, nach Ausschalten der Bremswiderstandsanordnung die erhitzte Flüssigkeit 6 abzukühlen und auf diese Weise besonders schnell eine erneute Betriebsbereitschaft herzustellen.

Typischerweise ist für die Flüssigkeit 6 ein vorher festgelegter Leitwert einzuhalten. Auch bei längerem Betrieb über Jahre oder Jahrzehnte sollte sichergestellt sein, dass der Leitwert der Auslegung der Anordnung weiterhin entspricht. Dies wird mittels der Leitwerteinstellungseinrichtung 27 sichergestellt. Diese kann beispielsweise die Flüssigkeit 6 verdünnen, um den Leitwert zu verringern oder Zusätze wie z.B. Salze hinzugeben, um den Leitwert zu erhöhen. Die Leitwerteinstellungseinrichtung 27 trägt dazu bei, dass die Bremswiderstandsanordnung 1 im Wesentlichen wartungsfrei eingesetzt werden kann. Zu diesem Zweck ist in der Leitwerteinstellungseinrichtung 27 eine Leitwertmesseinrichtung vorgesehen, die den Leitwert der durch die Leitwerteinstellungseinrichtung 27 gepumpten Flüssigkeit 6 ständig misst.

Die Pumpe 30 schließlich dient dazu, die Flüssigkeit 6 aus dem Inneren des Gehäuses ab- und wieder in dieses hineinzupumpen.

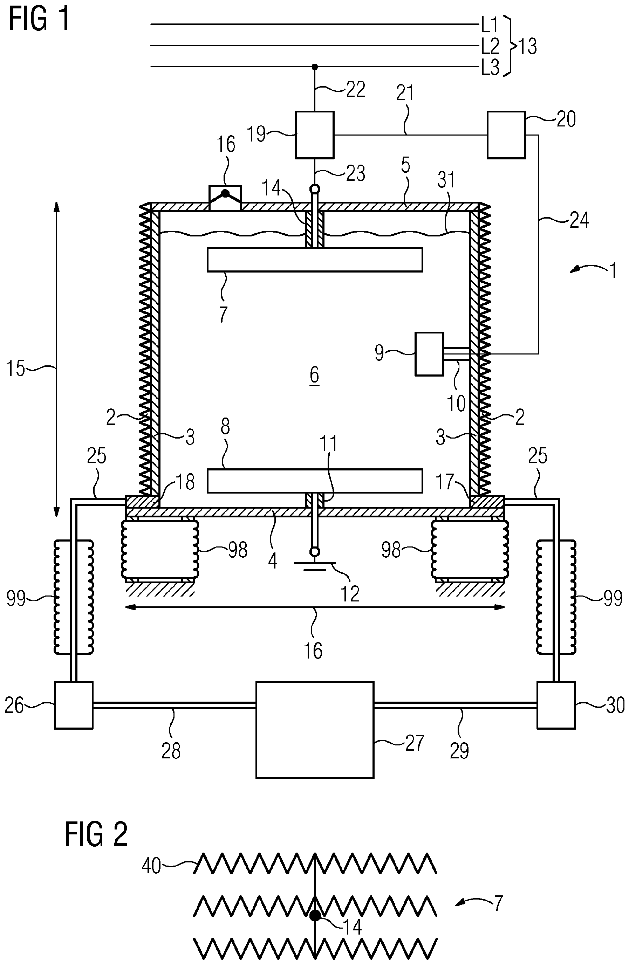

Die Figur 2 zeigt eine Draufsicht auf die erste Elektrode 7, die an dem Verbindungsstück 14 befestigt ist. Die Elektrode 7 weist eine vergrößerte Oberfläche in der Art auf, dass drei Platten mit sägezahnförmigem Querschnitt 40 vorgesehen sind, so dass sich eine besonders große Oberfläche für die Wechselwirkung mit der Flüssigkeit 6 ergibt. Alternativ kann auch eine nicht gezeigte mäanderförmige Ausgestaltung der Elektrode und/oder eine Verwendung von porösen Strukturen auf der Oberfläche der Elektrode vorgesehen sein.

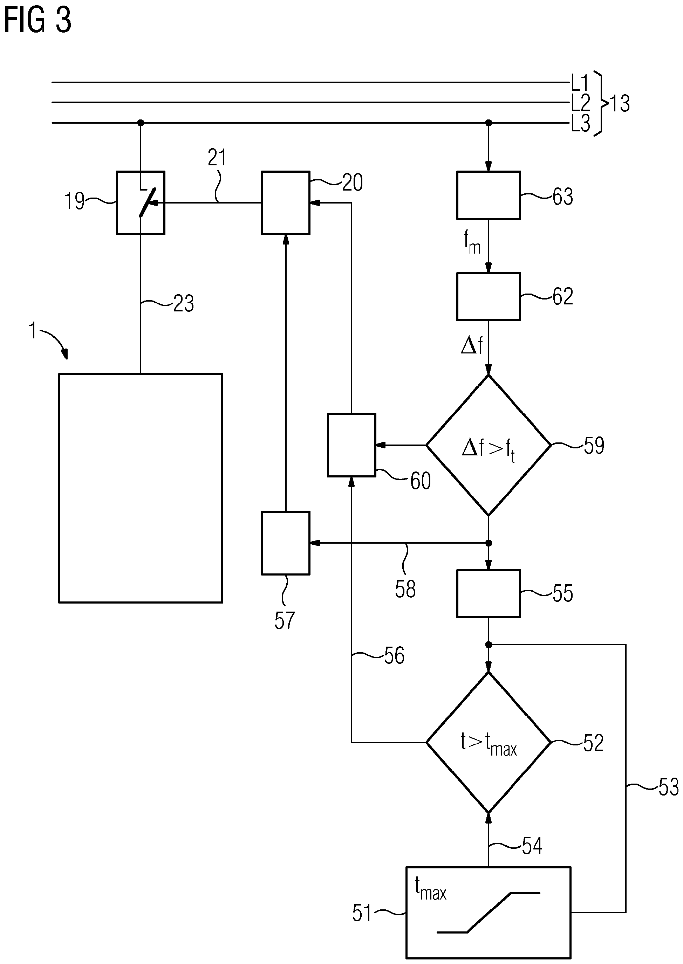

Die Figur 3 zeigt ein Prinzipschaltbild der logischen Vorgänge beim Ein- oder Ausschalten der Bremswiderstandsanordnung 1. Im linken Teil der Abbildung sind die aus der Figur 1 bekannten Komponenten vorhanden. Die Phase L3 ist über die Leistungsschalteinrichtung 19 mit der Bremswiderstandsanordnung 1 verbunden. Die Schutzvorrichtung 20 ist vorhanden und schaltet die Leistungsschalteinrichtung 19 ein oder aus. Im rechten Teil der Abbildung ist nun der Entscheidungspfad für Ein- oder Ausschalten näher beschrieben. In einem ersten Schritt 63 wird die Frequenz fₘ der Wechselspannung auf der Phase L3 ermittelt. Im nächsten Schritt 62 wird aus der ermittelten Frequenz fₘ eine Frequenzänderung Δf im Vergleich zur Nennfrequenz der Wechselspannung berechnet. Im nächsten Schritt 59 wird überprüft, ob die Frequenzänderung Δf über einem Schwellenwert fₜ liegt. Der Schwellenwert fₜ beträgt beispielsweise 1 Hz. Ist Δf nicht größer als fₜ, so wird der Status Ausschaltung 60 festgestellt und in der Schutzeinrichtung 20 bereitgestellt. Ist die Frequenzänderung Δf größer als fₜ, so wird über den Weg 58 der Status Einschaltung im Schritt 57 ermittelt. Der Status Einschaltung wird ebenfalls in der Schutzeinrichtung 20 bereitgestellt. Dieses Grundprinzip der Einschaltung und Ausschaltung mittels der Schutzeinrichtung 20 soll nun noch weiter verfeinert werden. Dafür wird im Schritt 25 ein bestimmter Zeitablauf überprüft. Beispielsweise wird festgestellt, ob die Frequenzänderung Δf für länger als 200 ms größer war als der Frequenzschwellenwert fₜ. Nur wenn dies der Fall ist, wird der Status Einschaltung 57 freigegeben. Auf diese Weise wird verhindert, dass auch kurzfristige Frequenzanstiege, also transiente Effekte, sofort zur Einschaltung der Bremswiderstandsanordnung führen. Weiterhin wird im Schritt 52 überprüft, ob die Temperatur der Flüssigkeit T oberhalb einer zulässigen Höchsttemperatur Tₘₐₓ liegt. Tₘₐₓ sollte je nach Art der Flüssigkeit unterhalb des Siedespunkts der Flüssigkeit festgelegt sein. Weist die Flüssigkeit T, beispielsweise durch einen gerade beendeten Einsatz der Bremswiderstandsanordnung 1, eine Temperatur oberhalb der maximal zulässigen Temperatur Tₘₐₓ auf, so wird im Schritt 52 mittels des Weges 56 ebenfalls der Status Ausschaltung dem Schutzgerät 20 bereitgestellt. Zur genaueren Steuerung der Bremswiderstandsanordnung 1 ist ein thermisches Abbild 51 der Bremswiderstandsanordnung beziehungsweise deren Erwärmung vorgesehen, das über die Wege 54 und 53 jeweils den logischen 52 und 55 zur Verfügung gestellt wird.

Alle diese genannten Schritte können beispielsweise in Software als Teil der Schutzeinrichtung 20 bereitgestellt werden.

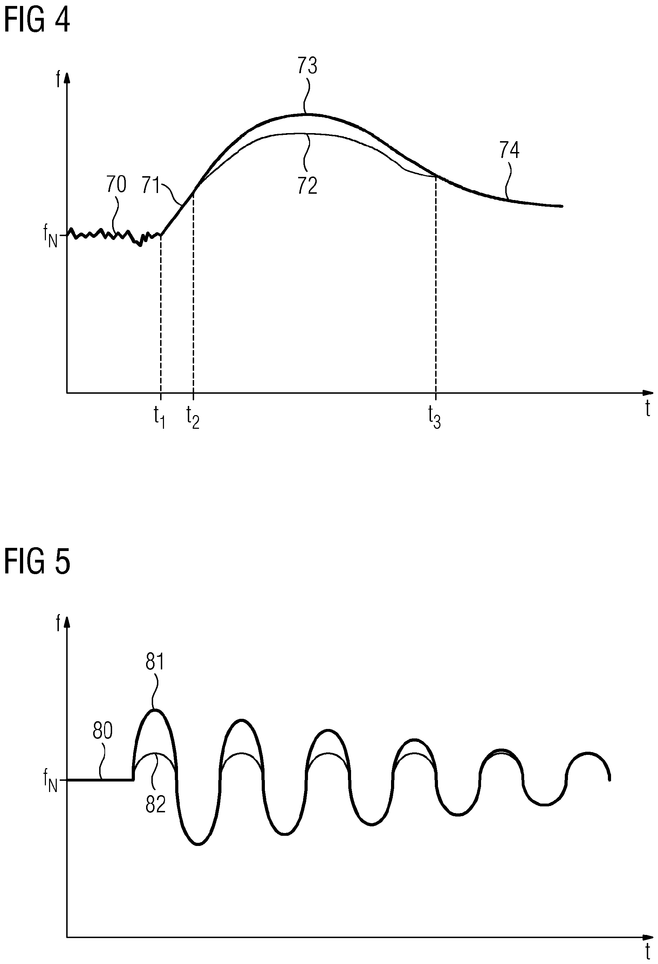

Die Figur 4 zeigt einen Frequenzverlauf f nach der Zeit t für eine Phase eines Hochspannungsenergieversorgungsnetzes. Die Frequenz f der Wechselspannung weist zu Beginn nur geringe Schwankungen 70 um die Nennfrequenz f_{N} auf. Zum Zeitpunkt t₁ ergibt sich ein stärkerer Frequenzanstieg 71, der zu Störungen und Beschädigungen im Energieversorgungsnetz führen könnte. Ohne Gegenmaßnahmen ergäbe sich der Frequenzverlauf 73, bei dem mit Gegenmaßnahmen wie Kraftwerksabschaltung und ähnlichen Maßnahmen gegengesteuert wird. Dies führt jedoch zu Blackouts und ähnlichen drastischen Störungen der Energieversorgung. Es ergibt sich im Endeffekt ab dem Zeitpunkt t₂ ein starker Anstieg 73, der durch die Gegenmaßnahmen ab dem Zeitpunkt t₃ wieder rückläufig ist und in einen Verlauf 74 mündet. In dem Bereich 74 hat die Frequenz wieder einen Bereich in der Nähe der Nennfrequenz f_{N} erreicht, in dem keine Schäden mehr zu erwarten sind. Wird nun am Zeitpunkt t₂ die erfindungsgemäße Bremswiderstandsanordnung eingesetzt, so wird der drastische Frequenzanstieg 73 erheblich abgemildert, so dass sich ein Verlauf 72 ergibt. Der Verlauf 72 mündet ab dem Zeitpunkt t₃ in einen ähnlichen Verlauf wie dies für den ungebremsten Fall 73 dargestellt ist. Mittels der erfindungsgemäßen Bremswiderstandsanordnung ist es also möglich, starke Frequenzanstiege oberhalb der Nennfrequenz abzumildern.

Die Figur 5 zeigt einen Frequenzverlauf f nach der Zeit, bei dem eine Phase eines dreiphasigen Energieversorgungsnetzes dargestellt ist. Bei großen Energieversorgungsnetzen kann es zu Schwingungen der Frequenz, so genannten "Interarea Power Oscillation Damping"-Funktionen (POD) kommen, die ein gefährliches Ausmaß erreichen können. Zunächst liegt die Frequenz in einem ersten Bereich 80 nahe der Nennfrequenz f_{N}. Ab dem Zeitpunkt t₁ treten starke Frequenzschwankungen 81 auf, die gleichmäßig in einen Bereich der Überfrequenz und in einen Bereich der Unterfrequenz schwingen. Die Schwingungen klingen mit der Zeit langsam ab. Wird zum Zeitpunkt t₁ oder kurz darauf ein Frequenzanstieg festgestellt, so kann mit der schnell zuschaltbaren Bremswiderstandsanordnung der Verlauf 82 in der ersten Schwingung erreicht werden. Es wird die Bremswiderstandsanordnung folglich nur für einen kurzen Zeitraum t₁ bis t₂ eingeschaltet, um die Frequenzspitze 81 stark abzumildern. Im Verlauf der weiteren Schwingungen wird die Bremswiderstandsanordnung bei einer Schwingung in den Überfrequenzbereich jeweils erneut kurz eingeschaltet, so dass der annähernd sinusförmige Verlauf der Frequenzschwingung im Bereich der Überfrequenz verlassen und stark abgemildert wird.

## Patentansprüche

1. Bremswiderstandsanordnung (1) zur Begrenzung eines Frequenzanstiegs in einem elektrischen Energieversorgungsnetz (13), aufweisend
ein Gehäuse, das zumindest teilweise mit einer Flüssigkeit (6) befüllbar ist,
eine erste Elektrode (7) und eine zweite Elektrode (8), wobei im Betrieb der Bremswiderstandsanordnung (1) die Elektroden unterschiedliche elektrische Potentiale aufweisen und die Elektroden in die Flüssigkeit (6) eintauchen, wobei eine Schutzeinrichtung (20) für ein Erkennen eines Frequenzanstiegs im elektrischen Energieversorgungsnetz (13) vorgesehen ist,
die Bremswiderstandsanordnung (1) derart ausgebildet ist, dass bei einem Frequenzanstieg ein elektrischer Strom über die Elektroden durch die Flüssigkeit (6) fließt, wobei sich die Flüssigkeit erwärmt, und die erste Elektrode (7) zum Anschließen an ein Hochspannungspotential oder ein Mittelspannungspotential vorgesehen ist, wobei
- die Bremswiderstandsanordnung (1) eine Flüssigkeitskreislaufanordnung sowie einen Flüssigkeitsauslass (17) und einen Flüssigkeitseinlass (18), die mit der Flüssigkeitskreislaufanordnung verbunden sind, aufweist,
- die Bremswiderstandsanordnung (1) eine in der Flüssigkeitskreislaufanordnung angeordnete Leitwerteinstellungseinrichtung (27) umfasst, welche zur Verringerung des Leitwerts der Flüssigkeit durch Zugabe eines Lösungsmittels oder zur Vergrößerung des Leitwerts der Flüssigkeit durch Zugabe eines Elektrolyten ausgebildet ist,
- die Flüssigkeitskreislaufanordnung eine Pumpe (30) aufweist, die über eine Verbindungsleitung (29) mit der Leitwerteinstellungseinrichtung (27) verbunden ist, wobei die Leitwerteinstellungseinrichtung (27) über eine Verbindungsleitung (28) mit einer Kühlvorrichtung (26) der Flüssigkeitskreislaufanordnung verbunden ist, und
- in der Leitwerteinstellungseinrichtung (27) eine Leitwertmesseinrichtung vorgesehen ist, die dazu ausgelegt ist, den Leitwert der durch
die Leitwerteinstellungseinrichtung (27) gepumpten Flüssigkeit (6) ständig zu messen,
**dadurch gekennzeichnet, dass**
- die zweite Elektrode (8) an das Erdpotential angeschlossen ist,
- das Gehäuse gegenüber der Flüssigkeit (6) elektrisch isoliert ist, und
- mindestens eine der Elektroden gefaltet ausgebildet ist, um eine vergrößerte Oberfläche für die Wechselwirkung mit der Flüssigkeit (6) bereit zu stellen.

2. Bremswiderstandsanordnung nach Anspruch 1, **dadurch gekennzeichnet, dass** eine Leistungsschalteinrichtung (19) vorgesehen ist und dass die Schutzeinrichtung (20) ausgebildet ist,
- bei einem Frequenzanstieg im elektrischen Energienetz mittels der Leistungsschalteinrichtung (19) den elektrischen Strom über die Elektroden durch die Flüssigkeit (6) zu leiten, und
- mittels der Leistungsschalteinrichtung (19) den elektrischen Strom über die Elektroden durch die Flüssigkeit (6) abzuschalten, bevor die Flüssigkeit siedet.

3. Bremswiderstandsanordnung nach Anspruch 1 oder 2, **dadurch gekennzeichnet, dass** eine Temperaturmesseinrichtung (9) für ein Messen der Temperatur der Flüssigkeit (6) vorgesehen ist.

4. Bremswiderstandsanordnung nach einem der vorhergehenden Ansprüche, **dadurch gekennzeichnet, dass** das
Gehäuse ein Überdruckventil (16) aufweist, das dafür ausgebildet ist, bei einem vorher festgelegten Überdruck im Gehäuse zu öffnen und Gas ausströmen zu lassen.

5. Bremswiderstandsanordnung nach einem der vorhergehenden Ansprüche, **dadurch gekennzeichnet, dass** der Flüssigkeitseinlass (18) und der Flüssigkeitsauslass (17) vorgesehen sind, um die Flüssigkeit (6) im Gehäuse auszutauschen.

6. Bremswiderstandsanordnung nach einem der vorhergehenden Ansprüche, **dadurch gekennzeichnet, dass** die Kühlvorrichtung (26) über den Flüssigkeitseinlass (18) und den Flüssigkeitsauslass (17) fluidleitend mit dem Gehäuse verbunden ist.

7. Überfrequenzschutzanordnung zur Begrenzung eines Frequenzanstiegs in einem elektrischen Energieversorgungsnetz (13) mit mehrphasiger Wechselspannung, aufweisend jeweils eine Bremswiderstandsanordnung (1) nach einem der Ansprüche 1 bis 6 für jede Phase der Wechselspannung.

8. Überfrequenzschutzanordnung nach Anspruch 7, **dadurch gekennzeichnet, dass** jeweils mindestens eine weitere Bremswiderstandsanordnung für jede Phase der Wechselspannung vorgesehen ist, und dass
die Schutzeinrichtung ausgebildet ist, mittels der Leistungsschalteinrichtung für jede Phase der Wechselspannung je nach benötigter Energieaufnahme eine oder mehrere Bremswiderstandsanordnung ein- oder auszuschalten.

9. Verfahren zur Begrenzung eines Frequenzanstiegs in einem elektrischen Energieversorgungsnetz (13), beim dem eine Bremswiderstandsanordnung nach einem der Ansprüche 1 bis 6 eingesetzt wird, um
- mittels einer Schutzeinrichtung (20) einen Frequenzanstieg im elektrischen Energieversorgungsnetz (13) zu erkennen, und
- mittels einer Leistungsschalteinrichtung (19) bei einem Frequenzanstieg im elektrischen Energieversorgungsnetz (13) den elektrischen Strom über die Elektroden durch die Flüssigkeit (6) zu leiten, so dass sich die Flüssigkeit erwärmt, und
- mittels einer Temperaturmesseinrichtung (9) die Temperatur der Flüssigkeit (6) zu überwachen, wobei
- mittels der Leistungsschalteinrichtung (19) der elektrische Strom über die Elektroden durch die Flüssigkeit (6) abgeschaltet wird, bevor die Flüssigkeit siedet.

10. Verfahren nach Anspruch 9, **dadurch gekennzeichnet, dass** eine Bremswiderstandsanordnung nach einem der Ansprüche 1 bis 6 für jede Phase der Wechselspannung eingesetzt wird.

11. Verfahren nach Anspruch 9, **dadurch gekennzeichnet, dass** mindestens eine weitere Bremswiderstandsanordnung für jede Phase der Wechselspannung eingesetzt wird, und dass mittels der Schutzeinrichtung die Leistungsschalteinrichtung derart gesteuert wird, dass für jede Phase der Wechselspannung je nach benötigter Energieaufnahme eine oder mehrere Bremswiderstandsanordnung ein- oder ausgeschaltet wird.

## Claims

1. Braking resistor arrangement (1) for limiting a frequency increase in an electrical energy supply grid (13), having a housing that is able to be at least partially filled with a liquid (6),
a first electrode (7) and a second electrode (8), wherein, during operation of the braking resistor arrangement (1), the electrodes have different electrical potentials and the electrodes are immersed in the liquid (6), wherein
a protective device (20) is provided for detecting a frequency increase in the electrical energy supply grid (13),
the braking resistor arrangement (1) is designed in such a way that, in the event of a frequency increase, an electric current flows through the liquid (6) via the electrodes, wherein the liquid heats up, and the first electrode (7) is provided to connect to a high-voltage potential or a medium-voltage potential, wherein
- the braking resistor arrangement (1) has a liquid circuit arrangement, and a liquid outlet (17) and a liquid inlet (18), which are connected to the liquid circuit arrangement,
- the braking resistor arrangement (1) comprises a conductance adjustment device (27) that is arranged in the liquid circuit arrangement and that is designed to reduce the conductance of the liquid through addition of a solvent or to increase the conductance of the liquid through addition of an electrolyte,
- the liquid circuit arrangement has a pump (30) that is connected to the conductance adjustment device (27) via a connection line (29), wherein the conductance adjustment device (27) is connected to a cooling apparatus (26) of the liquid circuit arrangement via a connection line (28), and
- a conductance measuring device is provided in the conductance adjustment device (27) and is configured to continuously measure the conductance of the liquid (6) pumped through the conductance adjustment device (27),
**characterized in that**
- the second electrode (8) is connected to the earth potential,
- the housing is electrically insulated with respect to the liquid (6), and
- at least one of the electrodes is designed in a folded manner in order to provide an increased surface area for the interaction with the liquid (6).

2. Braking resistor arrangement according to Claim 1, **characterized in that** a power switching device (19) is provided, and **in that** the protective device (20) is designed,
- in the event of a frequency increase in the electrical energy grid, to conduct the electric current through the liquid (6) via the electrodes by means of the power switching device (19), and
- to switch off the electric current through the liquid (6) via the electrodes by means of the power switching device (19) before the liquid boils.

3. Braking resistor arrangement according to Claim 1 or 2, **characterized in that** a temperature measuring device (9) is provided for measuring the temperature of the liquid (6).

4. Braking resistor arrangement according to one of the preceding claims, **characterized in that** the housing has an overpressure valve (16) that is designed to open and to allow gas to flow out in the event of a previously stipulated overpressure in the housing.

5. Braking resistor arrangement according to one of the preceding claims, **characterized in that** the liquid inlet (18) and the liquid outlet (17) are provided in order to exchange the liquid (6) in the housing.

6. Braking resistor arrangement according to one of the preceding claims, **characterized in that** the cooling apparatus (26) is connected to the housing in a fluid-conducting manner via the liquid inlet (18) and the liquid outlet (17).

7. Overfrequency protection arrangement for limiting a frequency increase in an electrical energy supply grid (13) with multiphase AC voltage, in each case having a braking resistor arrangement (1) according to one of Claims 1 to 6 for each phase of the AC voltage.

8. Overfrequency protection arrangement according to Claim 7, **characterized in that** in each case at least one further braking resistor arrangement is provided for each phase of the AC voltage, and **in that** the protective device is designed to switch on or switch off one or more braking resistor arrangements for each phase of the AC voltage depending on the required energy consumption by means of the power switching device.

9. Method for limiting a frequency increase in an electrical energy supply grid (13), in which a braking resistor arrangement according to one of Claims 1 to 6 is used
- to detect a frequency increase in the electrical energy supply grid (13) by means of a protective device (20), and,
- in the event of a frequency increase in the electrical energy supply grid (13), to conduct the electric current through the liquid (6) via the electrodes by means of a power switching device (19) such that the liquid heats up, and
- to monitor the temperature of the liquid (6) by means of a temperature measuring device (9), wherein
- the electric current through the liquid (6) via the electrodes is switched off by means of the power switching device (19) before the liquid boils.

10. Method according to Claim 9, **characterized in that** a braking resistor arrangement according to one of Claims 1 to 6 is used for each phase of the AC voltage.

11. Method according to Claim 9, **characterized in that** at least one further braking resistor arrangement is used for each phase of the AC voltage, and **in that** the power switching device is controlled by means of the protective device in such a way that one or more braking resistor arrangements are switched on or off for each phase of the AC voltage depending on the required energy consumption.

## Revendications

1. Agencement (1) de résistance de freinage pour la limitation d'une augmentation de la fréquence dans un réseau (13) d'alimentation en énergie électrique, comportant une enveloppe, qui peut être remplie au moins en partie d'un liquide (6),
une première électrode (7) et une deuxième électrode (8), dans lequel, lorsque l'agencement (1) de résistance de freinage est en fonctionnement, les électrodes ont des potentiels électriques différents et les électrodes plongent dans le liquide (6), dans lequel il est prévu un dispositif (20) de protection pour une détection d'une augmentation de la fréquence dans le réseau (13) d'alimentation en énergie électrique,
l'agencement (1) de résistance de freinage est constitué de manière à ce que, lorsqu'il se produit une augmentation de la fréquence, un courant électrique aux bornes des électrodes passe dans le liquide (6), le liquide s'échauffe et la première électrode (7) est prévue pour le raccordement d'un potentiel de haute tension ou d'un potentiel de moyenne tension, dans lequel
- l'agencement (1) de résistance de freinage a un agencement de circuit de liquide, ainsi qu'une sortie (17) de liquide et une entrée (18) de liquide, qui communiquent avec l'agencement de circuit de liquide,
- l'agencement (1) de résistance de freinage comprend un dispositif (27) de réglage de la conductance, qui est disposé dans l'agencement de circuit de liquide et qui est constitué pour diminuer la conductance du liquide par addition d'un solvant ou pour augmenter la conductance du liquide par addition d'un électrolyte,
- l'agencement de circuit de liquide a une pompe (30), qui, par un conduit (29) de liaison, communique avec le dispositif (27) de réglage de la conductance, dans lequel le dispositif (27) de réglage de la conductance communique par un conduit (28) de liaison avec un dispositif (26) de refroidissement de l'agencement de circuit de liquide, et
- il est prévu, dans le dispositif (27) de réglage de la conductance, un dispositif de mesure de la conductance, qui est conçu pour mesurer en permanence la conductance du liquide (6) pompé par le dispositif (27) de réglage de la conductance,
**caractérisé en ce que**
- la deuxième électrode (8) est raccordée au potentiel de terre,
- l'enveloppe est isolée électriquement par rapport au liquide (6), et
- au moins l'une des électrodes est de constitution plissée pour disposer d'une surface agrandie d'interaction avec le liquide (6) .

2. Agencement de résistance de freinage suivant la revendication 1, **caractérisé en ce qu'**il est prévu un dispositif (19) de coupure de puissance et **en ce que** le dispositif (20) de protection est constitué
- pour, lorsqu'il se produit une augmentation de la fréquence dans le réseau d'énergie électrique, conduire, au moyen du dispositif (19) de coupure de puissance, le courant électrique aux bornes des électrodes dans le liquide (6), et
- pour, au moyen du dispositif (19) de coupure de puissance, interrompre le courant électrique aux bornes des électrodes dans le liquide (6) avant l'ébullition du liquide.

3. Agencement de résistance de freinage suivant la revendication 1 ou 2, **caractérisé en ce qu'**il est prévu un dispositif (9) de mesure de la température pour une mesure d'une température du liquide (6).

4. Agencement de résistance de freinage suivant l'une des revendications précédentes, **caractérisé en ce que** l'enveloppe a une soupape (16) de surpression, qui est constituée pour, si une surpression est constatée auparavant dans l'enveloppe, l'ouvrir et en faire sortir du gaz.

5. Agencement de résistance de freinage suivant l'une des revendications précédentes, **caractérisé en ce que** l'entrée (18) du liquide et la sortie (17) du liquide sont prévues pour remplacer le liquide (6) dans l'enveloppe.

6. Agencement de résistance de freinage suivant l'une des revendications précédentes, **caractérisé en ce que** le dispositif (26) de refroidissement communique fluidiquement avec l'enveloppe par l'entrée (18) de liquide et par la sortie (17) de liquide.

7. Agencement de protection de surfréquence pour la limitation d'une augmentation de fréquence dans un réseau (13) d'alimentation en énergie électrique, ayant une tension alternative polyphasée comportant respectivement un agencement (1) de résistance de freinage suivant l'une des revendications 1 à 6 pour chaque phase de la tension alternative.

8. Agencement de protection vis-à-vis d'une surfréquence suivant la revendication 7, **caractérisé en ce qu'**il est prévu respectivement au moins un autre agencement de résistance de freinage pour chaque phase de la tension alternative, et **en ce que** le dispositif de protection est constitué pour, au moyen du dispositif de coupure de puissance, mettre, pour chaque phase de la tension alternative, suivant l'absorption d'énergie nécessaire en circuit ou hors circuit un ou plusieurs agencements de résistance de freinage.

9. Procédé de limitation d'une augmentation de la fréquence dans un réseau (13) d'alimentation en énergie électrique, dans lequel on utilise un agencement de résistance de freinage suivant l'une des revendications 1 à 6, pour
- détecter, au moyen d'un dispositif (20) de protection, une augmentation de la fréquence dans le réseau (13) d'alimentation en énergie électrique, et
- au moyen d'un dispositif (19) de coupure de puissance, lorsqu'il se produit une augmentation de la fréquence dans le réseau (13) d'alimentation en énergie électrique, faire passer le courant électrique aux bornes des électrodes dans le liquide (6), de manière à réchauffer le liquide, et
- contrôler, au moyen d'un dispositif (9) de mesure de la température, la température du liquide (6), dans lequel
- au moyen du dispositif (19) de coupure de puissance, on interrompt le courant électrique aux bornes des électrodes passant dans le liquide (6), avant l'ébullition du liquide.

10. Procédé suivant la revendication 9, **caractérisé en ce que** l'on utilise un agencement de résistance de freinage suivant l'une des revendications 1 à 6 pour chaque phase de la tension alternative.

11. Procédé suivant la revendication 9, **caractérisé en ce que** l'on utilise au moins un autre agencement de résistance de freinage pour chaque phase de la tension alternative et **en ce que**, au moyen du dispositif de protection, l'on commande le dispositif de coupure de puissance, de manière à mettre, pour chaque phase de la tension alternative, suivant l'absorption de l'énergie nécessaire, en circuit ou hors de circuit un ou plusieurs agencements de résistance de freinage.
